# EUROPÄISCHE PATENTANMELDUNG

(11) **EP 0 918 301 A2**
(43) Veröffentlichungstag der Anmeldung: **26.05.1999**
(21) Anmeldenummer: 98122036.1
(22) Anmeldetag: 20.11.1998
(51) Int. Cl.: G06K 19/14

(54) **Identifikationsträger**

(30) Priorität: 22.11.1997 DE 19751868
(71) Anmelder: Orga Consult GmbH, 33104 Paderborn (DE)
(72) Erfinder: Sochart, Heiko, D 33098 Paderborn (DE); Seelbach, Frank, D 33154 Salzkotten (DE)

(57) **Zusammenfassung**

Die Erfindung bezieht sich auf einen Identifikationsträger zur Speicherung von biometrischen Daten mit einem quaderförmigen Körper, wobei daß aus den biometrischen Daten charakteristische Kennungsdaten gebildet sind, die als grafische Kennungspunkte (7, 12) in einem Identifizierungsfeld (6) angeordnet sind.

## Beschreibung

Die Erfindung betrifft einen Identifikationsträger zur Speicherung von biometrischen Daten mit einem quaderförmigen Körper.

Aus der DE 196 52 393 A1 ist ein Identifikationsträger bekannt, der charakteristische Merkmale eines Fingerabdrucks als biometrische Daten in einem Speicher abgespeichert hat. Nach einem Vergleich dieser die Person kennzeichnenden Merkmale mit einem aktuellen Fingerabdruck der Person wird die Identifikation der Person festgestellt. Zusätzlich ist vorgesehen, daß ein Fingerabdruck auf dem Identifikationsträger in grafischer Form aufgebracht ist. Nachteilig an dem bekannten Identifikationsträger ist, daß die Prüfung der Identifikation auf den Vergleich der in einem elektronischen Speicher gespeicherten biometrischen Daten mit aktuellen biometrischen Daten beschränkt ist.

Der Erfindung liegt die Aufgabe zugrunde, einen Identifikationsträger derart auszubilden, daß eine einfache und fälschungssichere Identifizierung ermöglicht wird.

Zur Lösung dieser Aufgabe ist die Erfindung dadurch gekennzeichet, daß aus den biometrischen Daten charakteristische Kennungsdaten gebildet sind, die als grafische Kennungspunkte in einem Identifizierungsfeld angeordnet sind.

Der Vorteil der Erfindung besteht insbesondere darin, daß durch die Speicherung der charakteristischen Merkmale als grafische Kennungspunkte in einem Identifizierungsfeld eine einfache und kostengünstige Identitätsprüfung geschaffen wird. Die Kennungspunkte können durch bekannte Bedruckungs- oder Beschriftungsverfahren aufgebracht und durch handelsübliche Bilderkennungsverfahren gelesen werden. Vorzugsweise dient dasselbe Bildlesegerät sowohl zum Lesen der grafisch abgespeicherten Kennungspunkte als auch zum Lesen der aktuellen biometrischen Daten, vorzugsweise eines aktuellen Fingerabdrucks.

Nach einer Weiterbildung der Erfindung ist der Identifikationsträger als Chipkarte mit einem Halbleiterbaustein ausgebildet, in dem die biometrischen Daten in binärer Form abgespeichert sind. Somit wird eine doppelte Identifizierungsmöglichkeit ermöglicht, zum einen durch grafische und zum anderen durch elektronische Speicherung von kennzeichnenden biometrischen Merkmalen.

Nach einer Ausgestaltung der Erfindung sind sowohl die elektronisch als auch die grafisch gespeicherten Daten als verschlüsselte Daten abgespeichert. Auf diese Weise wird ein hohes Maß an Fälschungssicherheit erzielt, wobei bei Ausfall des einen Identifikationstyps die Durchführung des anderen Identifikationstyps gewährleistet und damit die Benutzung der Chipkarte zur Identifizierung aufrechterhalten wird.

Weitere Vorteile ergeben sich aus den weiteren Unteransprüchen.

Ausführungsbeispiele der Erfindung werden nachfolgend anhand von Zeichnungen näher erläutert.

Es zeigen:
- Figur 1: eine Draufsicht auf einen erfindungsgemäßen Identifikationsträger nach einem ersten Ausführungsbeispiel,
- Figur 2: einen Längsschnitt durch den Identifikationsträger gemäß Figur 1,
- Figur 3: eine Draufsicht auf einen erfindungsgemäßen Identifikationsträger nach einem zweiten Ausführungsbeispiel und
- Figur 4: einen Längsschnitt durch den Identifikationsträger gemäß Figur 3.

Der Identifikationsträger wird vorzugsweise zur Personenidentifizierung eingesetzt.

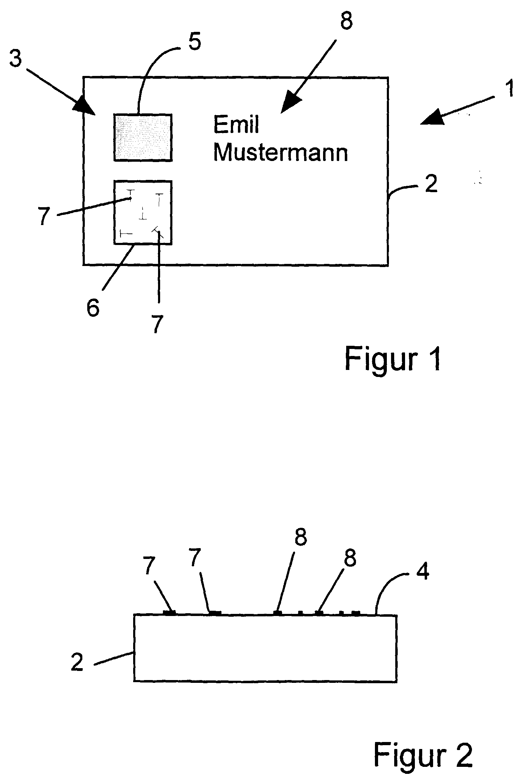

Nach einem ersten Ausführungsbeispiel gemäß Figur 1 und Figur 2 besteht der Identifikationsträger aus einer Chipkarte 1 bestehend aus einem quaderförmigen Kartenkörper 2 und einem in diesen eingebetteten Chipmodul 3, das einen in dem Kartenkörper 2 verborgenen Halbleiterbaustein mit einem Mikroprozessor und ein bündig mit einer Oberseite 4 der Chipkarte 1 abschließendes Kontaktfeld 5 aufweist. In dem Halbleiterbaustein sind die den Fingerabdruck einer Person kennzeichnenden Daten (Minutiae) gespeichert. Diese werden zur Identifizierung der Person in einem nicht dargestellten Terminal herausgelesen und mit den korrespondierenden aktuellen Daten eines Fingerabdrucks der Person (Livescan) verglichen. Bei Feststellung der Übereinstimmung mittels eines nach Fuzzy-Logik ablaufenden Ähnlichkeitsvergleichs wird beispielsweise die Zugangsberechtigung für die Person bejaht, in dem anderen Fall wird sie verweigert.

Der Kartenkörper 2 wird durch Spritzgießen hergestellt. Nachfolgend wird auf der Oberseite 4 durch Bedruckung zum einen in einem Identifizierungsfeld 6 eine Anzahl von die den Fingerabdruck der der Chipkarte 1 zugeordneten Person kennzeichnenden Minutiae 7 als Kennungspunkte hergestellt. Die absolute und relative Lage bzw. die Orientierung der Minutiae 7 ist ein Abbild der vorher mittels eines Fingerabdruck-Lesegeräts gelesenen und extrahierten Minutiae derselben Person. Dabei kann die Skalierung des Koordinatensystems verändert worden sein, so daß die Minutiae 7 an die Größe eines vorgegebenen Identifizierungsfeldes 6 auf der Karte 1 angepaßt sind. Die Kennungspunkte 7 tragen als Information neben der absoluten und relativen Lage auch entsprechend eines Drehwinkels die Winkelinformation der jeweiligen Minutiae 7 (Werte-Tripel), so daß bei entsprechender Anzahl der Minutiae 7 durch Ähnlichkeitsvergleich mit einem aktuellen Fingerabdruck die Zugehörigkeit der Karte 1 zur Person festgestellt werden kann. Die Minutiae 7 können durch ein Thermodruckverfahren grafisch auf die Oberfläche aufgebracht werden.

Zum anderen kann in einem benachbarten Abschnitt der Oberseite 4 der Name 8 des Karteninhabers oder dergleichen auf die gleiche Art aufgebracht werden.

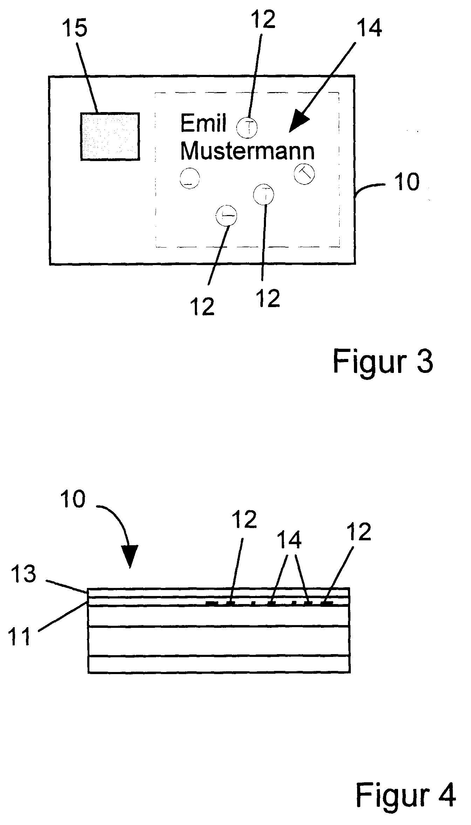

Nach einem zweiten Ausführungsbeispiel gemäß Figur 3 und Figur 4 wird eine Chipkarte 10 gleicher Funktion durch Laminieren mehrerer Kartenschichten hergestellt. Auf einer inneren Kartenschicht 11 ist durch ein Laserbeschriftungsverfahren die zu der Person zugehörigen Minutiae-Verteilung aufgebracht. Die Minutiae 12 sind in kodierter Form, d. h. verschlüsselt, aufgebracht, so daß nach dem Lesen der Minutiae 12 ein Entschlüsselung in einem externen Terminal stattfinden muß. Hierdurch tritt eine Erhöhung der Fälschungssicherheit ein. Auf einer äußeren Kartenschicht 13 werden andere Informationen zur offenen Kennzeichnung, hier der Namenszug 14 der zu identifizierenden Person mittels eines üblichen Bedruckungsverfahrens (Thermodruck) aufgebracht. Zur Herstellung der Chipkarte 10 wird eine Ausnehmung in dem laminierten Kartenkörper gebildet zur Einbettung eines die Minutiae in einem gesicherten Bereich als binäre Daten enthaltenen Chipmoduls 15. Zur Erhöhung der Datensicherheit können die in dem Chipmodul 15 gespeicherten Minutiae als verschlüsselte Daten einem Terminal zugeführt werden. Die Kennungspunkte 12 sind in einem Identifizierungsfeld angeordnet, das mit dem für den Namenszug 14 beschriftbaren Feld zusammenfällt. Zur eindeutigen Lesbarkeit der Kennungspunkte 12 sind diese jeweils durch einen dieselben umgebenden Kreis markiert.
Alternativ kann das Identifizierungsfeld auch als dreidimensionales Feld, insbesondere als Hologramm ausgebildet sein, so daß eine zusätzliche Information grafisch speicherbar ist.

## Patentansprüche

1. Identifikationsträger zur Speicherung von biometrischen Daten mit einem quaderförmigen Körper, dadurch gekennzeichnet, daß aus den biometrischen Daten charakteristische Kennungsdaten gebildet sind, die als grafische Kennungspunkte (7, 12) in einem Identifizierungsfeld (6) angeordnet sind.

2. Identifikationsträger nach Anspruch 1, dadurch gekennzeichnet, daß die Kennungspunkte (7, 12) in einem Oberflächenbereich des Identifikationsträgers angeordnet sind.

3. Identifikationsträger nach Anspruch 1 oder 2, dadurch gekennzeichnet, daß der Identifikationsträger als Chipkarte (1, 10) mit einem einen Mikroprozessor aufweisenden Halbleiterbaustein ausgebildet ist, wobei sich das Identifizierungsfeld (6) auf einer Oberseite (4) des Kartenkörpers (2) erstreckt.

4. Identifikationsträger nach einem der Ansprüche 1 bis 3, dadurch gekennzeichnet, daß die Kennungspunkte (7) mittels eines Thermodruckverfahrens auf der Oberseite (4) aufbringbar sind.

5. Identifikationsträger nach einem der Ansprüche 1 bis 3, dadurch gekennzeichnet, daß die Kennungspunkte (12) mittels eines induktiven Laserverfahrens auf eine innere Kartenschicht (11) des Kartenkörpers aufbringbar sind.

6. Identifikationsträger nach einem der Ansprüche 1 bis 5, dadurch gekennzeichnet, daß die Kennungspunkte (12) als kodierte Kennungspunkte in dem Identifizierungsfeld angeordnet sind.

7. Identifikationsträger nach einem der Ansprüche 1 bis 6, dadurch gekennzeichnet, daß die Kennungspunkte (7, 12) als grafische Darstellung von Minutiae eines Fingerabdrucks ausgebildet sind und daß das die relative Lage der Kennungspunkte (7, 12) zueinander in dem Identifizierungsfeld bildende Koordinatensystem zu dem ursprünglichen, bei der Detektion des Fingerabdrucks verwendeten Koordinatensystem korrespondiert oder zumindest in dieses transformierbar ist.

8. Identifikationsträger nach einem der Ansprüche 1 bis 7, dadurch gekennzeichnet, daß durch Abtastung der Kennungspunkte (7, 12) mittels eines optischen Lesegeräts die ursprüngliche Position und Orientierung der Minutiae reproduzierbar ist.

9. Identifikationsträger nach einem der Ansprüche 1 bis 8, dadurch gekennzeichnet, daß in dem Halbleiterbaustein die Koordinatenpunkte und weitere Parameter der Minutiae (7, 12) in binärer Form abgespeichert sind.
